# EUROPÄISCHE PATENTSCHRIFT

(11) **EP 1 180 888 B1**
(45) Veröffentlichungstag und Bekanntmachung des Hinweises auf die Patenterteilung: **05.04.2006**
(21) Anmeldenummer: 01117514.8
(22) Anmeldetag: 20.07.2001
(51) Int. Cl.: H04L 29/06

(54) **Verfahren zum Aufbauen einer Datenverbindung zwischen einer ersten und einer zweiten Recheneinheit und Vorrichtung zum Austauschen von Daten**
Method for setting up a data link between two computing units and system for data exchange
Méthode d'établissement d'une connection de données entre deux ordinateurs et dispositif d'échange de données

(30) Priorität: 18.08.2000 DE 10040463
(43) Veröffentlichungstag der Anmeldung: 20.02.2002
(73) Patentinhaber: Tenovis GmbH & Co. KG, 60362 Frankfurt am Main (DE)
(72) Erfinder: Schlesinger, Jürgen, 64572 Büttelborg (DE); Rohrdrommel, Dieter, 63477 Maintal (DE); Ackermann, Ralf, 64291 Darmstadt (DE); Roedig, Utz, 64283 Darmstadt (DE); Steinmetz, Ralf, 64342 Seeheim-Jugenheim (DE)
(74) Vertreter: Tergau & Pohl Patentanwälte

(56) Entgegenhaltungen:
- US-A- 6 052 718
- SMITH R N ET AL: "A PROTOCAL AND SIMULATION FOR DISTRIBUTED COMMUNICATING FIREWALLS" PROCEEDINGS OF THE 23RD. ANNUAL INTERNATIONAL COMPUTER SOFTWARE AND APPLICATIONS CONFERENCE. ( COMPSAC'99 ). PHOENIX, AZ, OCT. 27 - 29, 1999, ANNUAL INTERNATIONAL COMPUTER SOFTWARE AND APPLICATIONS CONFERENCE, LOS ALMITOS, CA: IEEE COMP. SOC, US, Bd. CONF. 23, 27. Oktober 1999 (1999-10-27), Seiten 74-79, XP000895487 ISBN: 0-7803-5956-9

## Beschreibung

Die Erfindung betrifft ein Verfahren zum Aufbauen einer Datenverbindung zwischen einer ersten und einer zweiten Recheneinheit gemäß dem Oberbegriff des Patentanspruchs 1 und eine Vorrichtung zum Austauschen von Daten gemäß dem Oberbegriff des Patentanspruchs 8.

Ein derartiges Verfahren ist bekannt von Smith et al., "A Protocol and Simulation for Distributed Communicating Firewalls", 23rd Annual International Computer Software and Applications Conference, IEEE Comp. Soc., 1999

In Netzsystemen wird üblicherweise ein Zugang von einem öffentlichen Bereich, wie beispielsweise dem Internet, in einen abgeschlossenen Bereich, wie beispielsweise einem Intranet, über eine Zugangsrecheneinheit geschaltet. Die Zugangsrecheneinheit stellt eine Verbindung zwischen dem geschlossenen Bereich und der Außenwelt dar. Vorzugsweise ist die Zugangsrecheneinheit als Firewall-Rechner ausgebildet, der die Zugangsberechtigung einer externen Recheneinheit überprüft und bei Vorliegen der Zugangsberechtigung einen Zugang zu dem geschlossenen Bereich zulässt. Neben der Zugangsberechtigung überwacht die Zugangsrecheneinheit zudem den Aufbau der Verbindung, die in den geschlossenen Bereich geschaltet wird, und filtert die Daten aus dem Datenstrom heraus, die vorgegebene Parameter nicht erfüllen. Auf diese Weise wird gewährleistet, dass nur korrekte Daten in den geschlossenen Bereich gelangen.

Damit externe Recheneinheiten einen Zugang zu dem geschlossenen Bereich erhalten können, wäre es erforderlich, dass die Zugangsrecheneinheit mit einer Vielzahl von Kommunikationsprotokollen zusammenarbeitet. Zum einen ist die Ausbildung der Zugangsrecheneinheit für eine Kompatibilität mit vielen Kommunikationsprotokollen relativ aufwendig und zum anderen ist eine Erweiterung der Funktionalität der Zugangsrechenein-heit relativ aufwendig, da Software-Komponenten der Zugangsrecheneinheit verändert und/oder adaptiert werden müssen.

Die Aufgabe der Erfindung besteht darin, ein Verfahren und eine Vorrichtung bereitzustellen, mit der ein einfacher Zugang zu einem geschlossenen Bereich möglich ist.

Die Aufgabe der Erfindung wird durch ein Verfahren gemäß dem Anspruch 1 und eine Vorrichtung gemäß dem Anspruch 8 gelöst.

Vorzugsweise ist eine weitere vierte Recheneinheit vorgesehen, die mit der Zugangsrecheneinheit in Verbindung steht, und die den Aufbau einer Datenverbindung und die Datenverbindung über die Zugangsrecheneinheit in den geschlossenen Bereich aufrecht erhält. In dieser Ausführungsform ist es nicht erforderlich, dass die Zugangsrecheneinheit, das von der externen, ersten Recheneinheit verwendete Kommunikationsprotokoll verarbeiten kann. Die Zugangsrecheneinheit übergibt das von der externen, ersten Recheneinheit übermittelte Datum an die weitere Recheneinheit, die den Aufbau einer Datenverbindung zu einer innerhalb eines geschlossenen Bereichs befindlichen zweiten Recheneinheit über die Zugangsrecheneinheit durchführt.

Somit ist beispielsweise eine Erweiterung der Kommunikationsprotokolle, die einen Zugang zu dem geschlossenen Bereich erhalten sollen, durch eine geringe Konfigurationsänderung in der Zugangsrecheneinheit und die Anordnung der weiteren Recheneinheit mit entsprechender Software zur Verarbeitung des neuen Kommunikationsprotokolls möglich.

Weitere vorteilhafte Ausbildungen der Erfindung sind in den abhängigen Ansprüchen angegeben. Vorzugsweise führt die weitere Recheneinheit eine Zugangsberechtigung der externen Recheneinheit durch. Auch werden weitere Überprüfungen der von der externen Recheneinheit gelieferten Daten in Bezug auf eine Korrektheit der Daten vorzugsweise von der weiteren Recheneinheit durchgeführt.

Eine weitere bevorzugte Ausführungsform der Erfindung besteht darin, dass die Zugangsrecheneinheit eine Zugangsberechtigung der externen Recheneinheit überprüft.

In einer bevorzugten Ausführungsform wird die Zugangsberechtigung der externen, ersten Recheneinheit von der weiteren Recheneinheit durchgeführt und nach Vorliegen einer Zugangsberechtigung eine Datenverbindung zwischen der externen, ersten Recheneinheit und einer zweiten Recheneinheit aufgebaut, wobei die Datenverbindung von der weiteren Recheneinheit über die Zugangsrecheneinheit aufgebaut wird, ohne dass die Zugangsrecheneinheit die Zugangsberechtigung der ersten Recheneinheit überprüft.

Vorzugsweise verändert die weitere Recheneinheit die in einem Datenpaket enthaltene Zieladresse und Absenderadresse in der Weise, dass ein Datenaustausch zwischen der externen, ersten Recheneinheit und der zweiten Recheneinheit nur über die weitere Recheneinheit folgt. Somit ist die weitere Recheneinheit immer die Zieladresse für die erste und zweite Recheneinheit, wobei Datenpakte, die von der weiteren Recheneinheit abgegeben werden, als Absenderadresse die Adresse der weiteren Recheneinheit enthalten.

In einer weiteren Variante der Erfindung überprüft die weitere Recheneinheit, ob die externe, erste Recheneinheit als Zieladresse einen Aliasnamen verwendet. Ist dies der Fall, so übergibt die weitere Recheneinheit die Datenpakte an eine fünfte Recheneinheit, die als Gatekeeper ausgebildet ist. Die fünfte Recheneinheit ermittelt aufgrund des Aliasnamen die Adresse der Recheneinheit, die mit dem Aliasnamen angesprochen werden soll. Nach Ermittlung der Adresse werden die Datenpakete an die Adresse übermittelt. Diese Vorgehensweise ermöglicht auch die Verarbeitung von Datenpaketen, die als Zieladresse einen Aliasnamen verwenden. Bei dieser bevorzugten Ausführungsform sind sowohl die fünfte Recheneinheit als auch die weitere Recheneinheit außerhalb des geschlossenen Bereichs angeordnet.

In einer bevorzugten Ausführungsform verarbeitet die weitere Recheneinheit Datenpakete nach dem Kommunikationsprotokoll Q.931 und H.245.

Vorzugsweise wird ein Anfragesignal von der externen, ersten Recheneinheit in Form eines Datenpaketes nach dem Kommunikationsprotokoll Q.931 verwendet.

Zum Aufbau einer Datenverbindung werden Daten zwischen der ersten und der zweiten Recheneinheit vorzugsweise nach dem Kommunikationsprotokoll H.245 ausgetauscht.

Die Erfindung wird im folgenden anhand der Figuren näher erläutert. Es zeigen:
Figur 1 eine Anordnung von Recheneinheiten mit einem geschlossenen Bereich, der über eine Zugangsrecheneinheit mit dem Internet und einer zweiten geschlossenen Zone (DMZ) an einen Gatekeeper und an einem Proxy-Server angeschlossen ist,
Figur 2 schematisch den Aufbau einer Datenverbindung über einen Proxy-Server,
Figur 3 ein Verfahren zum Aufbau einer Datenverbindung zwischen einer ersten und einer zweiten Recheneinheit, bei der die Zieladresse der zweiten Recheneinheit der ersten Recheneinheit bekannt ist und
Figur 4 den Aufbau einer Datenverbindung über den Proxy-Server und einen Gatekeeper.

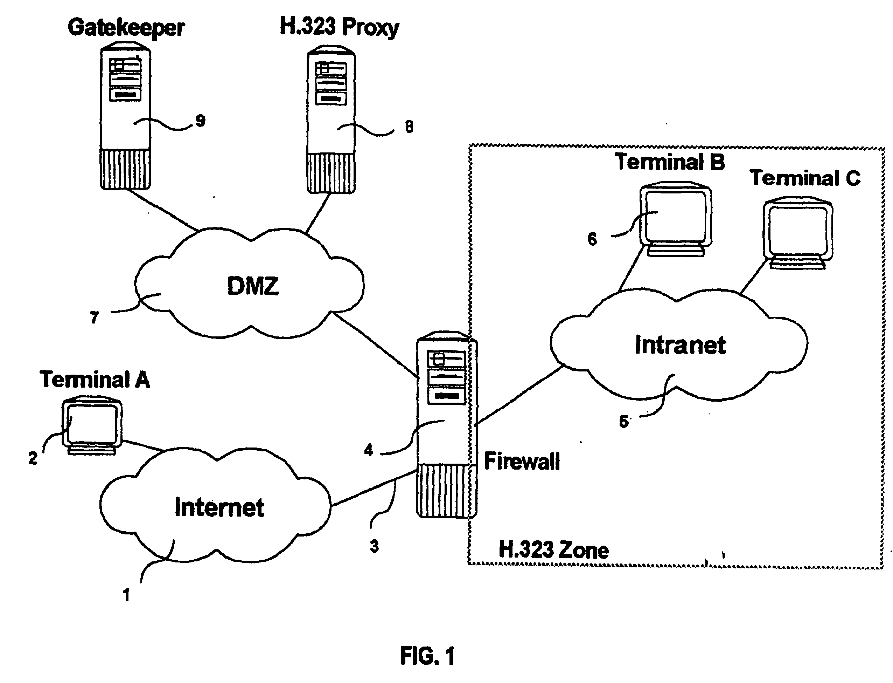

Figur 1 zeigt ein Netzwerk mit verschiedenen Bereichen, wobei ein erster Bereich 1 einen öffentlichen Bereich wie z.B. das Internet darstellt. An den ersten Bereich 1 sind eine Vielzahl von Recheneinheiten wie z.B. die erste Recheneinheit 2 (Terminal A) angeschlossen. Die erste Recheneinheit 2 stellt aus der Sicht des zweiten Bereichs 5 eine externe Recheneinheit dar. Der erste Bereich 1 steht über eine Datenleitung 3 mit einer dritten Recheneinheit 4 in Verbindung. Die dritte Recheneinheit 4 ist wiederum an einen zweiten Bereich 5 angeschlossen, der beispielsweise als Intranet ausgebildet ist. An dem zweiten Bereich 5 sind eine Vielzahl von Recheneinheiten und unter anderem die zweite Recheneinheit 6 angeschlossen.

Die dritte Recheneinheit 4 steht zudem mit einem dritten Bereich 7 in Verbindung, an den eine vierte Recheneinheit 8 und eine fünfte Recheneinheit 9 angeschlossen sind. Die vierte Recheneinheit 8 ist beispielsweise in Form eines Proxy-Servers ausgebildet, der Daten nach dem Kommunikationsprotokoll H.323 verarbeiten kann.

Die fünfte Recheneinheit 9 ist in Form eines Gatekeepers ausgebildet, der in einem Speicher eine Zuordnungstabelle von Aliasnamen zu IP-Adressen aufweist. Der dritte Bereich 7 ist beispielsweise als Local-Area-Network (LAN) ausgebildet.

In einer bevorzugten Ausführungsform stellt die dritte Recheneinheit 4 eine Zugangsrecheneinheit dar, die als Firewall-Recheneinheit ausgebildet ist, über die ein Zugang zu dem zweiten Bereich 5 möglich ist. Die Firewall-Recheneinheit führt dabei üblicherweise eine Überprüfung der Zugangsberechtigung zum zweiten Bereich 5 durch. Zudem werden die in den zweiten Bereich 5 übertragenen Datenpakete auf eine korrekte Form hin überprüft. Dabei ist die dritte Recheneinheit 4 auf bestimmte Kommunikationsprotokolle beschränkt. Beispielsweise kann die dritte Recheneinheit 4 nicht Daten in Form von Internet-Telefonie-Anwendungen verarbeiten, die beispielsweise nach dem H.323 Kommunikationsprotokoll ausgetauscht werden.

Die vierte Recheneinheit 8 stellt eine weitere Recheneinheit dar und kann vorzugsweise Daten verarbeiten, die für Internet-Telefonie-Anwendungen ausgetauscht werden und beispielsweise nach dem Kommunikationsprotokoll H.323 übertragen werden.

Die dritte Recheneinheit 4 verfügt über Softwarepakete, mit denen erkannt werden kann, ob Datenpakete nach dem Kommunikationsprotokoll H.323 übertragen werden. Erkennt die dritte Recheneinheit 4 Daten mit dem Kommunikationsprotokoll H.323, so werden diese Daten an die vierte Recheneinheit 8 weitergeleitet.

Internet-Telefonie wird dazu verwendet, um eine Sprachverbindung entsprechend der klassischen Telefonrufverbindung aufzubauen. Typische Anwendungen und Verfahrensabläufe verwenden derzeit verschiedene Kommunikationsprotokolle. Eines dieser Kommunikationsprotokolle ist die H.323 Protokollfamilie, die auch die Protokolle Q.931 und H.245 umfasst.

Die Aufgabe von Firewall-Rechnern besteht in erster Linie darin, den zweiten Bereich 5 gegenüber der Außenwelt abzusichern und nur Berechtigten eine Zugriff auf die Daten und/oder Recheneinheiten des zweiten Bereichs 5 zu erlauben. Dabei werden beispielsweise mit Paketfiltern Datenpakete überprüft und nur die Datenpakete in den zweiten Bereich 5 übermittelt, die eine Zugangsberechtigung aufweisen. Manche Firewall-Recheneinheiten verstecken auch den Aufbau des Netzwerks, der im zweiten Bereich 5 ausgebildet ist. In dieser Ausführungsform ist von außen nur die Firewall-Recheneinheit erkennbar.

Die erste, zweite und vierte Recheneinheit 2, 6, 8 sind in der Weise ausgebildet, um Daten nach dem Kommunikationsprotokoll H.323, H.245 und Q.931 zu verarbeiten.

In der beschriebenen Ausführungsform weist die dritte Recheneinheit 4, die als Firewall-Recheneinheit ausgebildet ist, drei Schnittstellen auf. Eine Schnittstelle ist mit dem ersten Bereich 1, dem Internet, eine zweite Schnittstelle mit dem zweiten Bereich 5, einem Intranet, und eine dritte Schnittstellen mit dem dritten Bereich 7, einem Local-Area-Network verbunden. Anstelle einer einzelnen, dritten Recheneinheit 4 kann auch eine Vielzahl von Recheneinheiten in Form eines Firewall-Systems angeordnet sein.

Sendet nun die erste Recheneinheit 2 eine Anfrage an die dritte Recheneinheit 4, um eine Internet-Telefonie-Verbindung nach dem H.323-Standard aufzubauen, so gibt die erste Recheneinheit 2 ein Anfragesignal nach dem Q.931-Standard an die dritte Recheneinheit 4. Die dritte Recheneinheit 4 überprüft das ankommende Signal und erkennt eine Anfrage in Form eines Q.931 Aufbausignals. Daraufhin übermittelt die dritte Recheneinheit 4 die von der ersten Recheneinheit 2 erhaltenen Daten zur vierten Recheneinheit 8, die eine Datenverbindung zwischen der ersten Recheneinheit 2 und einer gewünschten zweiten Recheneinheit 6 nach dem H.323-Standard über die dritte Recheneinheit 4 aufbaut. Dabei führt die vierte Recheneinheit 8 vorzugsweise eine Überprüfung der Zugangsberechtigung durch und überprüft die von der ersten Recheneinheit 2 abgegebenen Daten auf eine korrekte Form und übernimmt somit vorzugsweise die Überwachungs- und Überprüfungsfunktionen einer Firewall-Recheneinheit.

In einer einfachen Ausführungsform werden alle Daten, die von außen an die dritte Recheneinheit 4 gesendet werden, zu einer Überprüfung und einer eventuellen Weiterleitung an die vierte Recheneinheit 8 bzw. an die vierte und fünfte Recheneinheit 8, 9 weitergeleitet.

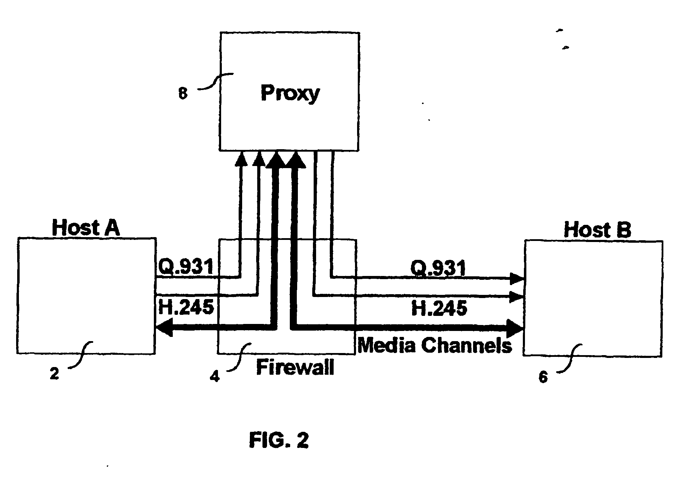

Figur 2 zeigt in Form eines schematischen Diagramms den Weg der Datensignale, die bei dem Aufbau einer Internet-Telefonie-Verbindung zwischen der ersten Recheneinheit 2 und der zweiten Recheneinheit 6 ausgetauscht werden. Dabei werden Daten nach dem Q.931-Standard von der ersten Recheneinheit 2 über die dritte Recheneinheit 4 an die vierte Recheneinheit 8 geleitet. Von der vierten Recheneinheit 8 gehen Daten nach dem Q.931-Standard über die dritte Recheneinheit 4 an die zweite Recheneinheit 6. Zudem gehen Daten von der ersten Recheneinheit 2 in Form des H.245-Standards über die dritte Recheneinheit 4 an die vierte Recheneinheit 8. Von der vierten Recheneinheit 8 gehen Daten im H.245-Standard über die dritte Recheneinheit 4 an die zweite Recheneinheit 6. Zwischen der ersten Recheneinheit 2 und der zweiten Recheneinheit 6 werden Medienkanäle vorzugsweise nach dem UDP-Standard von der ersten Recheneinheit 2 über die dritte Recheneinheit 4 zur vierten Recheneinheit 8 und von der vierten Recheneinheit 8 über die dritte Recheneinheit 4 zur zweiten Recheneinheit 6 aufgebaut.

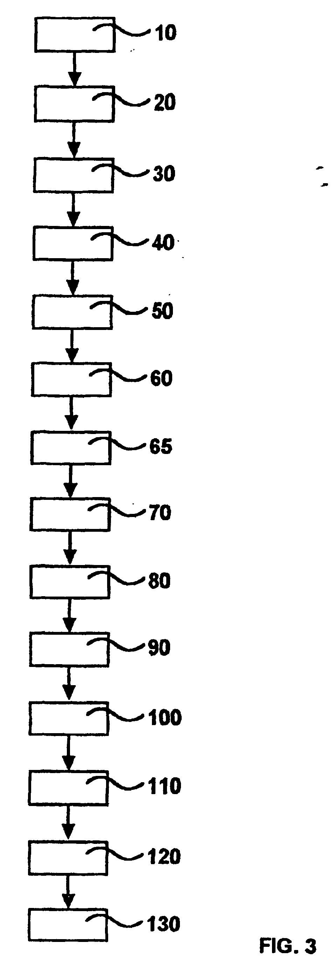

Figur 3 zeigt einen Verfahrensablauf, der einen Aufbau einer Datenverbindung entsprechend Figur 2 näher erläutert. Bei Programmpunkt 10 gibt die erste Recheneinheit 2 ein Anfragesignal in Form des Q.931-Standards an die dritte Recheneinheit 4. Die dritte Recheneinheit 4 überprüft das ankommende Signal und erkennt ein Signal nach dem Q.931-Standard bei Programmpunkt 20. Die dritte Recheneinheit 4 überprüft, ob es die empfangen Daten verarbeiten kann. Da jedoch die dritte Recheneinheit 4 nicht Daten nach dem Standard H.323 verarbeiten kann, gibt die dritte Recheneinheit 4 bei Programmpunkt 30 das Anfragesignal an die vierte Recheneinheit 8.

Die vierte Recheneinheit 8 erfasst bei Programmpunkt 40 das Anfragesignal und ermittelt aus dem Anfragesignal die Zieladresse, mit der eine Telefonverbindung aufgebaut werden soll. In dem beschriebenen Ausführungsbeispiel ist die Zieladresse, die Adressen der zweiten Recheneinheit 6. Anschließend verändert die vierte Recheneinheit 8 bei Programmpunkt 50 die Absenderadresse, die im Anfragesignal enthalten ist, in die eigene Adresse und sendet das veränderte Anfragesignal über die dritte Recheneinheit 4 an die zweite Recheneinheit 6. Vorzugsweise führt die vierte Recheneinheit 8 vor der Übertragung des Anfragesignals an die zweite Recheneinheit 6 eine Überprüfung der Zugangsberechtigung durch. Dabei werden vorgegebene Datenbereiche des Anfragesignals auf eine entsprechende Zugangskennung hin überprüft. Enthält das Anfragesignal keine entsprechende Zugangskennung, so wird eine Weiterleitung des Anfragesignals unterbunden.

Beim folgenden Programmpunkt 60 erhält die zweite Recheneinheit 6 das Anfragesignal. Die zweite Recheneinheit 6 gibt bei Programmpunkt 65 ein Antwortsignal in Form eines Q.931-Formates über die dritte Recheneinheit 4 an die vierte Recheneinheit 8. Die vierte Recheneinheit 8 empfängt bei Programmpunkt 70 das Antwortsignal und ändert sowohl die Zieladresse als auch die Absenderadresse des Antwortsignals. Als Zieladresse legt die vierte Recheneinheit 8 die Adresse der ersten Recheneinheit 2 und als Absenderadresse die Adresse der vierten Recheneinheit 8 fest.

Beim folgenden Programmpunkt 80 sendet die vierte Recheneinheit 8 das veränderte Antwortsignal im Q. 931-Standard über die dritte Recheneinheit 4 an die erste Recheneinheit 2.

Bei Programmpunkt 90 wertet die erste Recheneinheit 2 das enthaltene Antwortsignal aus und erkennt aufgrund des Antwortsignals, ob die zweite Recheneinheit 6 zum Aufbau einer Telefonverbindung bereit ist. Ist dies der Fall, so antwortet die erste Recheneinheit 2 bei Programmpunkt 90 mit einem Aufbausignal in Form des H.245-Standards. Im Aufbausignal sind weitere Parameter zur Einrichtung von Medienkanälen enthalten.

Das Aufbausignal wird über die dritte Recheneinheit 4 an die vierte Recheneinheit 8 gesendet. Die vierte Recheneinheit 8 verändert sowohl die Zieladresse als auch die Absenderadresse des Aufbausignals. Als Zieladresse wird die Adresse der zweiten Recheneinheit 6 und als Absenderadresse die Adresse der vierten Recheneinheit 8 verwendet.

Beim folgenden Programmpunkt 100 sendet die vierte Recheneinheit 8 das veränderte Aufbausignal über die dritte Recheneinheit 4 an die zweite Recheneinheit 6.

Beim folgenden Programmpunkt 110 antwortet die zweite Recheneinheit 6 in Form eines zweiten Antwortsignals nach dem H.245-Standard über die dritte Recheneinheit 4 an die vierte Recheneinheit 8. Die vierte Recheneinheit 8 setzt wieder die Absenderadresse und die Zieladresse um und übermittelt das zweite Antwortsignal an die erste Recheneinheit 2. Auf diese Weise werden Daten zwischen der ersten und der zweiten Recheneinheit 2, 6 ausgetauscht, die zu einem Aufbau eines Medienkanals benötigt werden.

Nach dem Austausch aller benötigten Daten zum Aufbau eines Medienkanals wird bei Programmpunkt 120 ein Medienkanal beispielsweise in Form des UDP-Protokolls aufgebaut, wobei der Medienkanal von der ersten Recheneinheit 2 über die dritte Recheneinheit 4 zur vierten Recheneinheit 8 und von der vierten Recheneinheit 8 über die dritte Recheneinheit 4 zur zweiten Recheneinheit 6 verläuft.

Somit besteht nun zwischen der ersten Recheneinheit 2 und der zweiten Recheneinheit 6 eine Telefonverbindung in Form eines H.323-Standards, dessen Daten von der dritten Recheneinheit 4, die als Firewall-Recheneinheit ausgebildet sind, nicht verarbeitet werden können.

Soll die Telefonverbindung zwischen der ersten und der zweiten Recheneinheit 2, 6 abgebaut werden, so werden bei Programmpunkt 130 entsprechende Datensignale, wie beim Aufbau der Datenverbindung über die dritte Recheneinheit 4 und die vierte Recheneinheit 8 ausgetauscht.

Während der Übertragung von Daten zwischen der ersten und der zweiten Recheneinheit 2, 6 überprüft vorzugsweise die vierte Recheneinheit 8 und/oder die dritte Recheneinheit 4 die Form der Datenpakete nach vorgegebenen Paketformen, so dass unkorrekte Datenpakete herausgefiltert und vor einem Zugang zum zweiten Bereich 5 herausgefiltert werden.

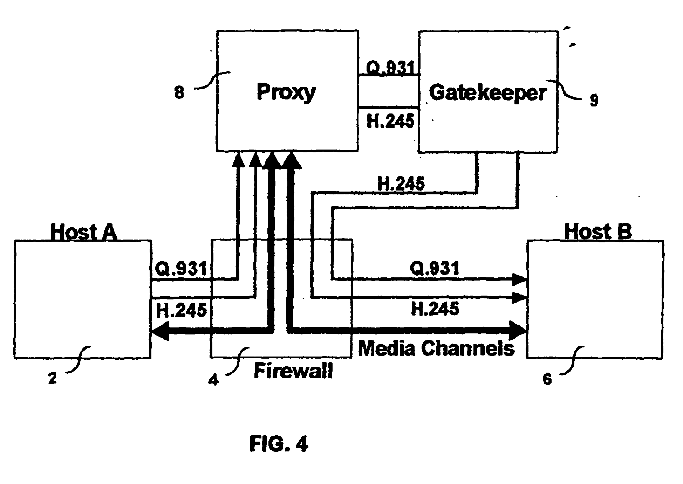

Figur 4 zeigt eine Weiterbildung der Erfindung, bei der für den Aufbau der Datenverbindung eine fünfte Recheneinheit 9 eingesetzt wird. Die fünfte Recheneinheit 9 ist als Gatekeeper ausgebildet und verfügt über einen Datenspeicher, in dem eine Tabelle zur Zuordnung von Aliasnamen zu Netzadressen, wie z.B. der IP-Adresse abgelegt ist. Das Anfragesignal im Q.931-Standard wird entsprechend Figur 2 über die dritte Recheneinheit 4 an die vierte Recheneinheit 8 geleitet. Die vierte Recheneinheit 8 verändert die Absenderadresse des erhaltenen Anfragesignals und schreibt die eigene Adresse als Absenderadresse in das Anfragesignal. Die vierte Recheneinheit 8 erkennt bei der Überprüfung des Anfragesignals, dass als Zieladressen ein Aliasname verwendet wird. Daraufhin übermittelt die vierte Recheneinheit 8 das Anfragesignal an die fünfte Recheneinheit 9. Die fünfte Recheneinheit 9 ermittelt aufgrund des im Anfragesignals Q.931 verwendeten Aliasnamen die Netzadresse der gewünschten Recheneinheit. In dem beschriebenen Ausführungsbeispiel wird eine Telefonverbindung von der ersten Recheneinheit 2 mit der zweiten Recheneinheit 6 gewünscht. Somit ermittelt die fünfte Recheneinheit 9 als Zieladresse für das Anfragesignal beispielsweise die IP-Adresse der zweiten Recheneinheit 6 und überträgt das Anfragesignal über die dritte Recheneinheit 4 an die zweite Recheneinheit 6.

Das Antwortsignal der zweiten Recheneinheit 6 wird ebenfalls über die dritte Recheneinheit 4 und den Gatekeeper 9 an die vierte Recheneinheit 8 geleitet.

Die vierte Recheneinheit 8 verändert entsprechend dem Verfahren der Figur 3 beim Antwortsignal die Zieladresse und die Absenderadresse, wobei als neue Zieladresse die Adresse der ersten Recheneinheit 2 und als Absenderadresse die Adresse der vierten Recheneinheit 8 verwendet wird. Das Antwortsignal wird von der vierten Recheneinheit 8 ebenfalls über die dritte Recheneinheit 4 an die erste Recheneinheit 2 gesendet.

Das folgende Anfragesignal im H.245-Standard wird, wie in der Ausführungsform der Figuren 2 und 3 über die dritte Recheneinheit 4 an die vierte Recheneinheit 8 geleitet. Die vierte Recheneinheit 8 erkennt wiederum die Verwendung eines Aliasnamens als Zieladresse. Daraufhin ändert die vierte Recheneinheit 8 die Absenderadresse des Aufbausignals und übergibt das veränderte Aufbausignal an die fünfte Recheneinheit 9. Die fünfte Recheneinheit 9 ermittelt aufgrund des verwendeten Aliasnamens die Zieladresse der gewünschten Recheneinheit und sendet das Aufbausignal über die dritte Recheneinheit 4 an die zweite Recheneinheit 6.

Nach dem Austausch entsprechender Daten über das Aufbausignal werden Medienkanäle von der ersten Recheneinheit 2 über die dritte Recheneinheit 4 zur vierten Recheneinheit 8 und ausgehend von der vierten Recheneinheit 8 über die dritte Recheneinheit 4 zur zweiten Recheneinheit 6 aufgebaut. Dieses Verfahren entspricht dem Verfahren, das in dem Ausführungsbeispiel der Figuren 2 und 3 verwendet wurde.

In dem Ausführungsbeispiel der Figur 4 werden die Zugangsberechtigung und/oder die Überwachung der korrekten Form der Datenpakete vorzugsweise von der vierten Recheneinheit 8 ausgeführt. Es können jedoch auch mindestens Teilaufgaben von der dritten Recheneinheit 4 oder der fünften Recheneinheit 9 übernommen werden.

Die Erfindung wurde am Beispiel des Aufbaus einer Datenverbindung zur Übertragung von Internet-Telefonie-Daten nach dem H.323-Standard, Q.931-Standard und H.245-Standard beschrieben. Die Erfindung ist jedoch nicht auf die Anwendung dieser Datenprotokolle beschränkt, sondern kann für jede Art von Datenübertragung eingesetzt werden. Wesentlich ist, dass die Verarbeitung, Überprüfung, Umsetzung von Daten, Absenderadressen und Zieladressen von einer Recheneinheit ausgeführt wird, die außerhalb eines von einer Firewall-Recheneinheit geschützten Bereichs angeordnet ist. Damit wird eine einfache Erweiterung der Verarbeitung von Datenprotokollen über die Anordnung einer entsprechenden Recheneinheit ermöglicht, ohne die Programmierung einer Firewall-Recheneinheit ändern zu müssen. Somit ist eine erhöhte Flexibilität des Netzwerks und der Zugangsberechtigung zu einem geschützten Bereich beispielsweise einem Intranet gegeben.

## Patentansprüche

1. Verfahren zum Aufbauen einer Datenverbindung zwischen einer ersten Recheneinheit (2) und einer zweiten Recheneinheit (6), wobei die Datenverbindung zu der zweiten Recheneinheit (6) über eine dritte Recheneinheit (4) aufgebaut werden kann,
wobei von der ersten Recheneinheit (2) ein Anfragesignal an die dritte Recheneinheit (4) geleitet wird,
wobei die dritte Recheneinheit (4) das Anfragesignal überprüft,
**dadurch gekennzeichnnet,** dass
die dritte Recheneinheit (4) bei Vorliegen eines vorgegebenen Anfragesignals das Anfragesignal zu einer vierten Recheneinheit (8) weiterleitet,
dass die vierte Recheneinheit (8) das Anfragesignal überprüft, und
dass die vierte Recheneinheit (8) bei Vorliegen vorgebbarer Parameter über die dritte Recheneinheit (4) eine Datenverbindung zwischen der ersten und zweiten Recheneinheit (2, 6) aufbaut.

2. Verfahren nach Anspruch 1,
**dadurch gekennzeichnet, dass**
vor dem Aufbau einer Datenverbindung von der dritten und/oder der vierten Recheneinheit (4, 8) eine Zugangsberechtigung der ersten Recheneinheit (2) überprüft wird und eine Datenverbindung zugelassen wird, wenn die Zugangsberechtigung vorliegt.

3. Verfahren nach Anspruch 2,
**dadurch gekennzeichnet, dass**
die vierte Recheneinheit (8) eine Überprüfung der Zugangsberechtigung durchführt,
dass bei Vorliegen der Zugangsberechtigung die vierte Recheneinheit (8) über die dritte Recheneinheit (3) eine Datenverbindung zu der zweiten Recheneinheit (6) aufbaut, und
dass die dritte Recheneinheit (4) die Datenverbindung zwischen der vierten Recheneinheit (8) und der zweiten Recheneinheit (6) zulässt, ohne eine Überprüfung einer Zugangsberechtigung durchzuführen.

4. Verfahren nach einem der Ansprüche 1 bis 3,
**dadurch gekennzeichnet, dass**
das Anfragesignal eine Zieladresse und eine Absenderadresse aufweist,
dass die vierte Recheneinheit (8) die Absenderadresse in die eigene Adresse ändert, und
dass die vierte Recheneinheit (8) das Anfragesignal über die dritte Recheneinheit an die Zieladresse sendet.

5. Verfahren nach einem der Ansprüche 1 bis 4,
**dadurch gekennzeichnet , dass**
die erste Recheneinheit (2) ein Aufbausignal mit einer Absenderadresse der ersten Recheneinheit (2) der dritten Recheneinheit (4) zuführt,
dass die dritte Recheneinheit (4) das Aufbausignal an die vierte Recheneinheit (8) übergibt,
dass die vierte Recheneinheit (8) die Absenderadresse in die eigene Adresse umwandelt und das veränderte Aufbausignal über die dritte Recheneinheit (4) der zweiten Recheneinheit (6) als Zieladresse zuführt,
dass die zweite Recheneinheit (6) ein Antwortsignal an die vierte Recheneinheit (8) als Zieladresse über die dritte Recheneinheit (4) sendet,
wobei das Antwortsignal als Absenderadresse die Adresse der zweiten Recheneinheit (6) aufweist,
dass die vierte Recheneinheit (8) die Zieladresse des Antwortsignals in die Adresse der ersten Recheneinheit (2) ändert,
dass die vierte Recheneinheit (8) die Absenderadresse in die Adresse der vierten Recheneinheit (8) ändert,
und dass die vierte Recheneinheit (8) anschließend das veränderte Antwortsignal über die dritte Recheneinheit (4) an die erste Recheneinheit (2) sendet.

6. Verfahren nach einem der Ansprüche 1 bis 5,
**dadurch gekennzeichnet, dass**
die vierte Recheneinheit (8) das Anfragesignal auswertet und einen Aliasnamen erkennt,
dass daraufhin die vierte Recheneinheit (8) das Anfragesignal an eine fünfte Recheneinheit (9) übermittelt,
dass die fünfte Recheneinheit (9) aufgrund des Aliasnamen eine Adresse für die zweite Recheneinheit (6) ermittelt,
dass die fünfte Recheneinheit (9) das Anfragesignal über die dritte Recheneinheit (4) an die Adresse der zweiten Recheneinheit (6) weiterleitet.

7. Verfahren nach Anspruch 6,
**dadurch gekennzeichnet, dass**
die erste Recheneinheit (2) ein Aufbausignal der dritten Recheneinheit (4) zuführt,
dass die dritte Recheneinheit (4) das Aufbausignal an die vierte Recheneinheit (8) übergibt,
dass die vierte Recheneinheit (8) das Aufbausignal der fünften Recheneinheit (9) zuführt, und
dass die fünfte Recheneinheit (9) das Aufbausignal über die dritte Recheneinheit (4) der zweiten Recheneinheit (6) zuführt,
wobei zwischen der ersten und der zweiten Recheneinheit (2, 6) Daten zum Aufbau einer Datenverbindung ausgetauscht werden.

8. Vorrichtung zum Austauschen von Daten mit einer zweiten Recheneinheit (6), die mit einer dritten Recheneinheit (4) verbunden ist,
wobei die dritte Recheneinheit (4) ein Anfragesignal überprüft,
**dadurch gekennzeichnet, dass**
die dritte Recheneinheit (4) mit einer vierten Recheneinheit (8) verbunden ist,
dass die dritte Recheneinheit (4) bei Vorliegen eines vorgegebenen Anfragesignals das Anfragesignal an die vierte Recheneinheit (8) weiterleitet,
dass die vierte Recheneinheit (8) das Anfragesignal überprüft, und
dass die vierte Recheneinheit (8) bei Vorliegen vorgebbarer Parameter über die dritte Recheneinheit (4) eine Datenverbindung zwischen der ersten und zweiten Recheneinheit (2, 6) aufbaut.

9. Vorrichtung nach Anspruch 8,
**dadurch gekennzeichnet, dass**
Daten zwischen der ersten und zweiten Recheneinheit (2, 6) jeweils über die dritte und vierte Recheneinheit (4, 8) ausgetauscht werden,
wobei die vierte Recheneinheit (8) Absender- und/oder der Zieladressen der ausgetauschten Daten ändert.

10. Vorrichtung nach Anspruch 8 oder 9,
**dadurch gekennzeichnet, dass**
die vierte Recheneinheit (8) eine Überprüfung einer Zugangsberechtigung der ersten Recheneinheit (1) zum Aufbau eines Kontaktes zur zweiten Recheneinheit (2) vornimmt, und
dass die vierte Recheneinheit (8) eine Datenverbindung von der ersten Recheneinheit (2) zur zweiten Recheneinheit (6) aufbaut, wenn die Zugangsberechtigung vorliegt.

11. Vorrichtung nach einem der Ansprüche 8 bis 10,
**dadurch gekennzeichnet, dass**
die vierte Recheneinheit (8) mit einer fünften Recheneinheit (9) verbunden ist,
dass die fünfte Recheneinheit (9) eine Umsetzung eines Aliasnamen als Zieladresse, die von der ersten Recheneinheit (2) verwendet wird, in eine interne Adresse vornimmt, und
dass die vierte Recheneinheit (8) eine Datenverbindung zwischen der ersten und zweiten Recheneinheit (2, 6) unter Benutzung der internen Adresse der zweiten Recheneinheit (6) aufbaut.

## Claims

1. Method for setting up a data link between a first processor (2) and a second processor (6), the data link to the second processor (6) being able to be set up via a third processor (4),
where the first processor (2) sends a request signal to the third processor (4), and
where the third processor (4) checks the request signal,
**characterized in that**
if a prescribed request signal is present then the third processor (4) forwards the request signal to a fourth processor (8),
**in that** the fourth processor (8) checks the request signal, and
**in that** if prescribable parameters are present then the fourth processor (8) uses the third processor (4) to set up a data link between the first and second processors (2, 6).

2. Method according to Claim 1,
**characterized in that**
before a data link is set up the third and/or the fourth processor (4, 8) check(s) an access authorization for the first processor (2), and a data link is permitted if the access authorization is present.

3. Method according to Claim 2,
**characterized in that**
the fourth processor (8) checks the access authorization,
**in that** if the access authorization is present then the fourth processor (8) uses the third processor (3) to set up a data link to the second processor (6), and
**in that** the third processor (4) permits the data link between the fourth processor (8) and the second processor (6) without checking an access authorization.

4. Method according to one of Claims 1 to 3,
**characterized in that**
the request signal has a destination address and a sender address,
**in that** the fourth processor (8) changes the sender address to its own address, and
**in that** the fourth processor (8) sends the request signal to the destination address via the third processor.

5. Method according to one of Claims 1 to 4,
**characterized in that**
the first processor (2) supplies a setup signal having a sender address for the first processor (2) to the third processor (4),
**in that** the third processor (4) transfers the setup signal to the fourth processor (8),
**in that** the fourth processor (8) converts the sender address to its own address and supplies the altered setup signal via the third processor (4) to the second processor (6) as destination address,
**in that** the second processor (6) sends a response signal to the fourth processor (8) as destination address via the third processor (4),
with the response signal having the address of the second processor (6) as sender address,
**in that** the fourth processor (8) changes the destination address in the response signal to the address of the first processor (2),
**in that** the fourth processor (8) changes the sender address to the address of the fourth processor (8),
and **in that** the fourth processor (8) then sends the altered response signal via the third processor (4) to the first processor (2).

6. Method according to one of Claims 1 to 5,
**characterized in that**
the fourth processor (8) evaluates the request signal and identifies an alias name,
**in that** the fourth processor (8) then transmits the request signal to a fifth processor (9),
**in that** the fifth processor (9) takes the alias name as a basis for ascertaining an address for the second processor (6),
**in that** the fifth processor (9) forwards the request signal via the third processor (4) to the address of the second processor (6).

7. Method according to Claim 6,
**characterized in that**
the first processor (2) supplies a setup signal to the third processor (4),
**in that** the third processor (4) transfers the setup signal to the fourth processor (8),
**in that** the fourth processor (8) supplies the setup signal to the fifth processor (9), and
**in that** the fifth processor (9) supplies the setup signal via the third processor (4) to the second processor (6),
with data for setting up a data link being interchanged between the first and second processors (2, 6).

8. Apparatus for interchanging data with a second processor (6), which is connected to a third processor (4),
where the third processor (4) checks a request signal,
**characterized in that**
the third processor (4) is connected to a fourth processor (8),
**in that** if a prescribed request signal is present then the third processor (4) forwards the request signal to the fourth processor (8),
**in that** the fourth processor (8) checks the request signal, and
**in that** if prescribable parameters are present then the fourth processor (8) uses the third processor (4) to set up a data link between the first and second processors (2, 6).

9. Apparatus according to Claim 8,
**characterized in that**
data are interchanged between the first and second processors (2, 6) via the respective third and fourth processors (4, 8),
with the fourth processor (8) changing the sender and/or destination addresses of the interchanged data.

10. Apparatus according to Claim 8 or 9,
**characterized in that**
the fourth processor (8) checks an access authorization for the first processor (1) to set up contact with the second processor (2), and
**in that** the fourth processor (8) sets up a data link from the first processor (2) to the second processor (6) if the access authorization is present.

11. Apparatus according to one of Claims 8 to 10,
**characterized in that**
the fourth processor (8) is connected to a fifth processor (9),
**in that** the fifth processor (9) converts an alias name, as destination address which is used by the first processor (2), to an internal address, and
**in that** the fourth processor (8) sets up a data link between the first and second processors (2, 6) using the internal address of the second processor (6).

## Revendications

1. Procédé pour établir une liaison de données entre un premier ordinateur (2) et un deuxième ordinateur (6), la liaison de données vers le deuxième ordinateur (6) pouvant être établie par l'intermédiaire d'un troisième ordinateur (4),
un signal de demande étant envoyé par le premier ordinateur (2) au troisième ordinateur (4),
le troisième ordinateur (4) vérifiant le signal de demande,
**caractérisé par le fait que**
en présence d'un signal de demande prédéterminé, le troisième ordinateur (4) retransmet le signal de demande à un quatrième ordinateur (8),
le quatrième ordinateur (8) vérifie le signal de demande, et
en présence de paramètres pouvant être prescrits, le quatrième ordinateur (8) établit par l'intermédiaire du troisième ordinateur (4) une liaison de données entre le premier et le deuxième ordinateur (2, 6).

2. Procédé selon la revendication 1,
**caractérisé par le fait que**, avant l'établissement d'une liaison de données par le troisième et/ou le quatrième ordinateur (4, 8), on vérifie une autorisation d'accès du premier ordinateur (2) et on autorise une liaison de données lorsque l'autorisation d'accès existe.

3. Procédé selon la revendication 2,
**caractérisé par le fait que**
le quatrième ordinateur (8) effectue une vérification de l'autorisation d'accès,
en présence de l'autorisation d'accès, le quatrième ordinateur (8) établit par l'intermédiaire du troisième ordinateur (4) une liaison de données vers le deuxième ordinateur (6), et
le troisième ordinateur (4) autorise la liaison de données entre le quatrième ordinateur (8) et le deuxième ordinateur (6) sans effectuer une vérification d'une autorisation d'accès.

4. Procédé selon l'une des revendications 1 à 3,
**caractérisé par le fait que**
le signal de demande comporte une adresse de destination et une adresse d'émetteur,
le quatrième ordinateur (8) modifie l'adresse d'émetteur en la remplaçant par son adresse personnelle, et
le quatrième ordinateur (8) envoie le signal de demande par l'intermédiaire du troisième ordinateur à l'adresse de destination.

5. Procédé selon l'une des revendications 1 à 4,
**caractérisé par le fait que**
le premier ordinateur (2) envoie un signal d'établissement avec une adresse d'émetteur du premier ordinateur (2) au troisième ordinateur (4),
le troisième ordinateur (4) transmet le signal d'établissement au quatrième ordinateur (8),
le quatrième ordinateur (8) transforme l'adresse d'émetteur en la remplaçant par son adresse personnelle et envoie le signal d'établissement modifié par l'intermédiaire du troisième ordinateur (4) au deuxième ordinateur (6) comme adresse de destination,
le deuxième ordinateur (6) envoie un signal de réponse au quatrième ordinateur (8) comme adresse de destination par l'intermédiaire du troisième ordinateur (4),
le signal de réponse comportant comme adresse d'émetteur l'adresse du deuxième ordinateur (6),
le quatrième ordinateur (8) modifie l'adresse de destination du signal de réponse en la remplaçant par l'adresse du premier ordinateur (2),
le quatrième ordinateur (8) modifie l'adresse d'émetteur en la remplaçant par l'adresse du quatrième ordinateur (8),
et le quatrième ordinateur (8) envoie ensuite le signal de réponse modifié par l'intermédiaire du troisième ordinateur (4) au premier ordinateur (2).

6. Procédé selon l'une des revendications 1 à 5,
**caractérisé par le fait que**
le quatrième ordinateur (8) évalue le signal de demande et reconnaît un alias,
le quatrième ordinateur (8) transmet alors le signal de demande à un cinquième ordinateur (9),
le cinquième ordinateur (9) détermine sur la base de l'alias une adresse pour le deuxième ordinateur (6),
le cinquième ordinateur (9) retransmet le signal de demande par l'intermédiaire du troisième ordinateur (4) à l'adresse du deuxième ordinateur (6).

7. Procédé selon la revendication 6,
**caractérisé par le fait que**
le premier ordinateur (2) envoie un signal d'établissement au troisième ordinateur (4),
le troisième ordinateur (4) transmet le signal d'établissement au quatrième ordinateur (8),
le quatrième ordinateur (8) envoie le signal d'établissement au cinquième ordinateur (9), et
le cinquième ordinateur (9) envoie le signal d'établissement par l'intermédiaire du troisième ordinateur (4) au deuxième ordinateur (6),
des données étant échangées entre le premier et le deuxième ordinateur (2, 6) pour l'établissement d'une liaison de données.

8. Dispositif pour échanger des données avec un deuxième ordinateur (6) qui est relié à un troisième ordinateur (4),
le troisième ordinateur (4) vérifiant un signal de demande,
**caractérisé par le fait que**
le troisième ordinateur (4) est relié à un quatrième ordinateur (8),
en présence d'un signal de demande prédéterminé, le troisième ordinateur (4) retransmet le signal de demande au quatrième ordinateur (8),
le quatrième ordinateur (8) vérifie le signal de demande, et
en présence de paramètres pouvant être prescrits, le quatrième ordinateur (8) établit par l'intermédiaire du troisième ordinateur (4) une liaison de données entre le premier et le deuxième ordinateur (2, 6).

9. Dispositif selon la revendication 6,
**caractérisé par le fait que**
des données sont échangées entre le premier et le deuxième ordinateur (2, 6) à chaque fois par l'intermédiaire du troisième et du quatrième ordinateur (4, 8),
le quatrième ordinateur (8) modifie des adresses d'émetteur et/ou de destination des données échangées.

10. Dispositif selon la revendication 8 ou 9,
**caractérisé par le fait que**
le quatrième ordinateur (8) effectue une vérification d'une autorisation d'accès du premier ordinateur (2) pour l'établissement d'un contact vers le deuxième ordinateur (6), et
le quatrième ordinateur (8) établit une liaison de données du premier ordinateur (2) au deuxième ordinateur (6) lorsque l'autorisation d'accès existe.

11. Dispositif selon l'une des revendications 8 à 10,
**caractérisé par le fait que**
le quatrième ordinateur (8) est relié à un cinquième ordinateur (9),
le cinquième ordinateur (9) effectue une conversion d'un alias comme adresse de destination utilisée par le premier ordinateur (2) en une adresse interne, et
le quatrième ordinateur (8) établit une liaison de données entre le premier et le deuxième ordinateur (2, 6) en utilisant l'adresse interne du deuxième ordinateur (6).
